# EUROPÄISCHE PATENTSCHRIFT

(11) **EP 3 434 926 B1**
(45) Veröffentlichungstag und Bekanntmachung des Hinweises auf die Patenterteilung: **18.03.2020**
(21) Anmeldenummer: 18184081.0
(22) Anmeldetag: 18.07.2018
(51) Int. Cl.: F16D 65/18, F16D 65/56, F16D 55/2255

(54) **SCHEIBENBREMSE SOWIE BREMSHEBEL EINER NACHSTELLEINRICHTUNG EINER SCHEIBENBREMSE**
DISC BRAKE AND BRAKE LEVER OF AN ADJUSTMENT DEVICE OF A DISC BRAKE
FREIN À DISQUE AINSI QUE LEVIER DE FREIN D'UN DISPOSITIF DE RATTRAPAGE DE JEU D'UN FREIN À DISQUE

(30) Priorität: 24.07.2017 DE 102017116599
(43) Veröffentlichungstag der Anmeldung: 30.01.2019
(73) Patentinhaber: BPW Bergische Achsen KG, 51674 Wiehl (DE)
(72) Erfinder: Klaas, Thomas, 51580 Reichshof (DE); Goyke, Georg, 51588 Nümbrecht (DE); Damberg, Andreas, 51588 Nümbrecht (DE)
(74) Vertreter: Christophersen Patentanwälte

(56) Entgegenhaltungen:
- EP-A2- 1 852 627
- WO-A1-2016/112895
- DE-U1-202017 002 779

## Beschreibung

Die Erfindung betrifft eine Scheibenbremse für ein Fahrzeug, vorzugsweise ein Nutzfahrzeug, mit einem eine Bremsscheibe und Bremsbeläge zu beiden Seiten der Bremsscheibe übergreifenden Bremssattel, einer durch ein Kraftglied und vorzugsweise einen Druckluftzylinder betätigbaren Zuspanneinrichtung, einer Nachstelleinrichtung zum Ausgleich des Bremsbelag- und Bremsscheibenverschleißes, die auf einer in Zuspannrichtung sich erstreckenden Nachstellachse angeordnet, und mit einem um die Nachstellachse drehbaren Antriebselement versehen ist, und einem Bremshebel, der Bestandteil der Zuspanneinrichtung ist und sich zusammensetzt aus einer Zuspannwelle, die in dem Bremssattel auf einer Schwenkachse gelagert und gegen ein gegen den zuspannseitigen Bremsbelag arbeitendes Druckstück drehbeweglich abgestützt ist, und einem mit der Zuspannwelle verbundenen Hebelarm, dessen Schwenkmittellinie sich rechtwinklig zu der Zuspannwelle erstreckt, und der im Bereich seines äußeren Endes mit einer Abstützung für das Kraftglied versehen ist, wobei der Bremshebel in Verlängerung des Hebelarms nach innen einen Freiraum aufweist, durch den sich die Nachstellachse erstreckt, einem Getriebe, welches den Bremshebel mit dem Antriebselement koppelt und sich aus einem Zapfen an dem Bremshebel und einer damit zusammenwirkenden Kulisse an dem Antriebselement zusammensetzt, wobei der Zapfen an dem inneren Ende des Hebelarms in der durch die Schwenkbewegung des Hebelarms definierten Ebene angeordnet ist.

Die Erfindung betrifft ferner einen Bremshebel mit den Merkmalen des Patentanspruchs 13.

Aus der WO 2016/112895 A1 ist eine für die Verwendung in Nutzfahrzeugbremsen geeignete Scheibenbremse bekannt, die mit einem innerhalb eines Bremssattel verschwenkbar angeordneten Bremshebel versehen ist. Zum Ausgleich des im Bremsbetrieb auftretenden Bremsbelag- und Bremsscheibenverschleißes ist, ebenfalls innerhalb des Bremssattels, eine Nachstelleinrichtung vorgesehen. Um die Nachstellung aus der Schwenkbewegung des Bremshebels abzuleiten, ist ein Getriebe vorhanden, welches den Bremshebel mit einem Antriebselement der Nachstelleinrichtung koppelt. Dazu ist an dem Bremshebel ein Zapfen angeordnet, der mit seinem freien Ende in eine nachstellseitig angeordnete, schräg zur Nachstellachse der Nachstelleinrichtung verlaufende Kulisse eingreift und beim Verschwenken des Bremshebels längs der Kulisse geführt wird. Das Verschwenken des Bremshebels um dessen Schwenkachse führt zu einem Drehen des Antriebselements, wobei die Drehbewegung je nach Brems- bzw. Lüftspielsituation über geeignete Übertragungselemente in eine lineare Nachstellbewegung umgewandelt werden kann.

Bei der Scheibenbremse aus WO 2016/112895 A1 ist der Zapfen in jenem Bereich angeordnet, in dem sich der Bremshebel gabelförmig in einen ersten Schenkel und einen zweiten Schenkel teilt. Die Schenkel führen jeweils zu einem ersten bzw. zweiten Abschnitt der Zuspannwelle. Insbesondere befindet sich der Zapfen an jenem Ort, der sich zwischen der Nachstellachse und der am freien Ende des Hebelarms angeordneten Abstützung für das Kraftglied befindet.

Aus der WO 2016/112895 A1 ist eine Zapfengestalt bekannt, bei welcher der Zapfen an seinem in die Kulisse hineinragenden Ende mit einem kugelförmigen Ende versehen ist. Das kugelförmige Ende des Zapfens gleitet beim Verschwenken des Bremshebels entlang der Kulissenlaufbahn und berührt dabei die Innenflächen der Kulisse.

Das kontinuierliche Hin- und Herbewegen des Zapfens, bzw. seines kugelförmigen Endes in der Kulisse kann zu einer Materialabnutzung bzw. Materialabtragung an den Kulisseninnenflächen führen. Dies ist insbesondere problematisch, wenn Materialien unterschiedlicher Härte gegeneinander gleiten bzw. aneinander reiben. Durch die auftretenden Reibungskräfte nutzt sich insbesondere das weichere Material ab. Verstärkt wird dieser Effekt, wenn die Kontaktfläche bzw. Anlagefläche zwischen beiden Bauteilen, also zwischen Zapfen und Kulisse, gering ist. Dadurch können punktuell relativ starke Reibungskräfte auftreten.

Eine solche geringe Kontaktfläche liegt beispielsweise vor, sofern das Zapfenende als Kugel ausgestaltet ist. Auch wenn die Kugelform Vorteile bei der Kompensation von Toleranzen bzw. der Vermeidung von Schrägstellungen aufweist, kann sich eine solche Kugelgeometrie auf Dauer in das Material der Kulisse eingraben, d. h. dessen Materialoberfläche abtragen.

Verschleiß lässt sich im Prinzip reduzieren, wenn die Kontaktfläche zwischen dem Zapfen und der Kulisse vergrößert ist, wodurch die auftretenden Reibungskräfte gleichmäßiger verteilt werden. Neben einer reinen Kontaktflächenerhöhung sind jedoch noch weitere Aspekte zu berücksichtigen. So könnte eine maximale Kontaktfläche zwar theoretisch durch einen Zapfen in Gestalt eines Zylinders erreicht werden, aufgrund der Toleranzen der Kulissen und der Lage der Bauteile kommt es jedoch nicht zu der gewünschten Flächenanlage, sondern zu einer Kantenberührung.

Der Erfindung liegt die **Aufgabe** zugrunde, für eine Scheibenbremse der eingangs genannten Art eine Lösung bereitzustellen, bei der die Abnutzung des Kulissenmaterials verringert, und gleichzeitig ein Verkanten zwischen Zapfen und Kulisse vermieden wird.

Zur **Lösung** dieser Aufgabe wird bei einer Scheibenbremse für ein Fahrzeug, vorzugsweise ein Nutzfahrzeug vorgeschlagen, dass der Zapfen über den größten Teil seiner Länge eine nach außen gekrümmte Außenkontur aufweist und dass an jeder Längsposition der Krümmungsradius der Außenkontur größer ist als der halbe Querschnittsdurchmesser des Zapfens an dieser Position. Die Aufgabe wird ferner auch mit einem Bremshebel gelöst, der die vorstehend genannten Merkmale aufweist.

In einer bevorzugten Ausgestaltung der Erfindung ist der Zapfen bezüglich seiner Längsachse rotationssymmetrisch ausgebildet. Beim Verschwenken des Bremshebels kann der Zapfen entlang der schräg verlaufenden Kulissen-Laufbahn in unterschiedlichen Winkeln im Kontakt zu den Innenflächen der Kulisse stehen. Durch die rotationssymmetrische Ausgestaltung des Zapfens ist das Gleiten des Zapfens in der Kulisse erleichtert. Ferner lassen sich symmetrisch gestaltete Bauteile leichter und kostengünstiger fertigen.

In einer weiteren bevorzugten Ausgestaltung der Erfindung weist der Zapfen nacheinander angeordnet einen Fuß- und Befestigungsabschnitt und den die gekrümmte Außenkontur aufweisenden Abschnitt auf. Der Zapfen kann mit seinem Fuß- und Befestigungsabschnitt als Kerbstift ausgeführt und in den Hebelarm bzw. den Bremshebel im Presssitz eingeschlagen sein. Dabei ist es vorteilhaft, dass der Bremshebel eine Bohrung aufweist. Auch kann der Zapfen im Bereich des Fuß- und Befestigungsabschnitts mit einem Außengewinde versehen sein, mit welchem er in ein dazu korrespondierendes Innengewinde der Bohrung am Bremshebel eingeschraubt wird. Ferner ist es denkbar den Zapfen beim Gießen des Bremshebels anzuformen oder den Zapfen durch Schweißen mit dem Bremshebel zu verbinden. Der Zapfen kann also fest oder lösbar mit dem Hebelarm verbunden sein.

Gemäß einer weiteren Ausgestaltung der Erfindung ist es vorteilhaft, dass der die gekrümmte Außenkontur aufweisende Abschnitt eine konvexe Außenkontur aufweist. Vorzugsweise weist der genannte Abschnitt zwei Teilabschnitte auf. Im Übergangsbereich zwischen dem ersten und zweiten Teilabschnitt verläuft eine an der Außenkontur anliegende Tangente parallel zur Längsachse des Zapfens. Insbesondere ist vorteilhaft, dass die Außenkontur des ersten und zweiten Teilabschnitts in Längsrichtung eine Steigung mit umgekehrten Vorzeichen aufweist. Erst durch eine derartig gestaltete Außenkontur wird eine bessere Verteilung der auftretenden Reibungskräfte an den Kulisseninnenflächen ermöglicht.

Gemäß einer weiteren Ausgestaltung der Erfindung ist der erste Teilabschnitt näher zu dem Bremshebel hin gelegen als der zweite Teilabschnitt. Entlang der Längsachse weist der erste Teilabschnitt eine größere Länge auf als der daran anschließende zweite Teilabschnitt.

In einer weiteren Ausgestaltung der Erfindung ist es von Vorteil, dass sich die Kulisse schräg zu der durch die Schwenkbewegung des Hebelarms definierten Ebene erstreckt. Der Winkel, unter dem sich die Kulisse schräg zu der durch die Schwenkbewegung des Hebelarms definierten Ebene erstreckt, kann über die Länge der Kulisse variieren.

Von Vorteil ist es insbesondere, dass die Kulisse aus Kunststoff besteht. Eine Fertigung aus Kunststoff ist kostengünstig und ermöglicht ein geringes Bauteilgewicht. Kunststoffbauteile sind insbesondere dann zu bevorzugen, wenn es sich um Verschleiß- und Austauschbauteile handelt. Weiterhin ist es vorteilhaft, die Kulisse als Wabenstruktur zu fertigen. Eine solche Wabenstruktur ist durch einen segmentartigen Aufbau mit Materialaussparungen charakterisiert. Ein derartiger wabenartiger Aufbau begünstigt die Stabilitätseigenschaften des Bauteils, hier der Kulisse.

Im Folgenden ist die Erfindung anhand zweier Ausführungsbeispiele unter Bezugnahme auf die Zeichnungen näher erläutert. Es zeigen:
- Fig. 1: in perspektivischer Darstellung eine Zuspanneinrichtung nach dem Stand der Technik als Bestandteil einer Scheibenbremse;
- Fig. 2: in perspektivischer Darstellung eine erfindungsgemäße Zuspanneinrichtung einer Scheibenbremse;
- Fig. 3: in perspektivischer Darstellung eine weitere Ansicht der Zuspanneinrichtung;
- Fig. 4: eine schematische Vorderansicht eines Bremshebels als Bestandteil der erfindungsgemäßen Scheibenbremse;
- Fig. 5: eine Schnittansicht des an dem Bremshebel angeordneten Zapfens in einer ersten Ausführungsform der Erfindung;
- Fig. 6: eine Schnittansicht des an dem Bremshebel angeordneten Zapfens in einer alternativen Ausführungsform;
- Fig. 7: in perspektivischer Darstellung das Antriebselement der Nachstelleinrichtung als Bestandteil der erfindungsgemäßen Scheibenbremse.

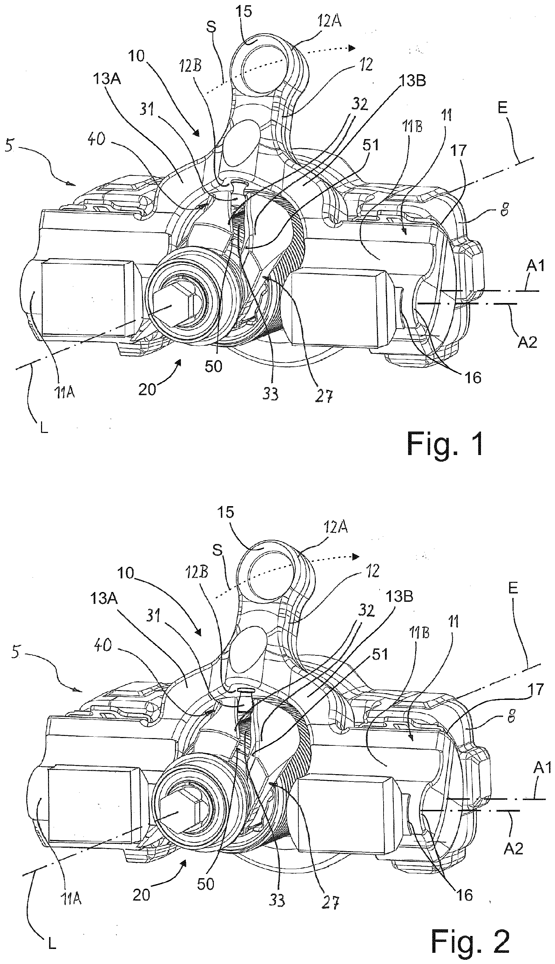

In den Zeichnungen, insbesondere in den Figuren 1 und 2 ist nicht eine ganze Scheibenbremse wiedergegeben, sondern nur die zugehörige Zuspanneinrichtung 5 der Scheibenbremse. Hinsichtlich weiterer Einzelheiten der Scheibenbremse einschließlich deren Bremssattel, der Bremsscheibe und den Bremsbelägen zu beiden Seiten der Bremsscheibe wird, da insoweit die übliche Bauform einer solchen Scheibenbremse vorgeschlagen wird, auf jene Scheibenbremsen Bezug genommen, wie sie z. B. in der DE 10 2008 037 774 B3 und in der DE 43 07 018 A1 beschrieben sind.

In den Figuren 1 und 2 sind die Hauptbestandteile der Zuspanneinrichtung 5 dargestellt, deren Aufgabe die Verstärkung von durch ein Kraftglied erzeugten Bremskräften durch Hebelwirkung ist. Deren Bestandteile sind unter anderem ein in einem Bremssattel 2 der Scheibenbremse schwenkbar gelagerter Bremshebel 10 sowie ein gegen zumindest einen der Bremsbeläge der Scheibenbremse arbeitendes Druckstück 8. Die Figuren 1 und 2 zeigen das Druckstück 8 in Gestalt einer sich über die gesamte Breite des Bremshebels 10 erstreckenden Traverse.

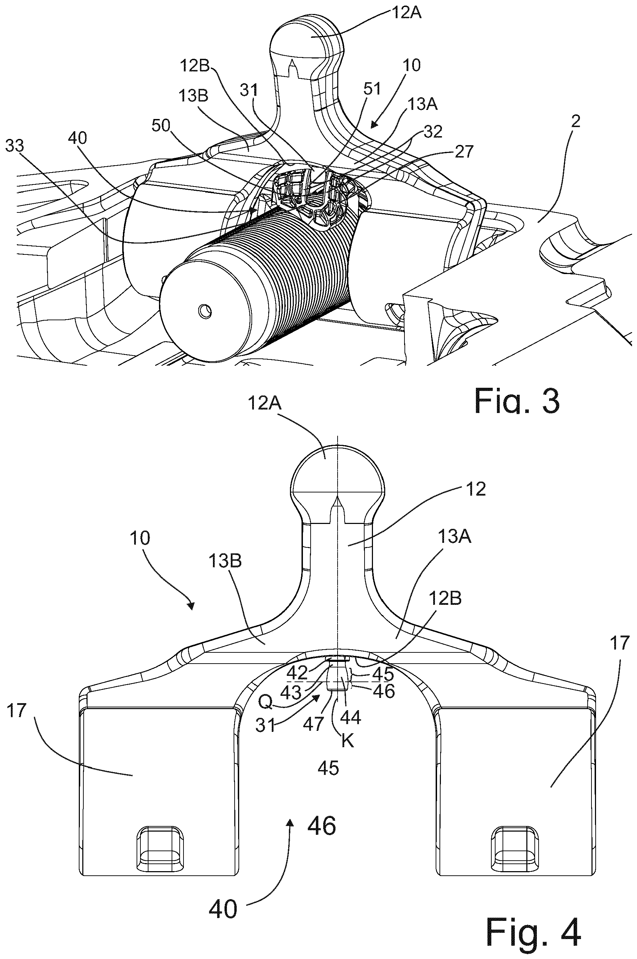

Die Fig, 1 zeigt eine Zuspanneinrichtung einer aus dem Stand der Technik, insbesondere der WO 2016/112895 A1, vorbekannten Scheibenbremse. Der Bremshebel 10 setzt sich zusammen aus einer in zwei Abschnitte aufgeteilten Zuspannwelle 11 und einem Hebelarm 12. Die Zuspannwelle 11 ist an ihrer Rückseite von innen her gegen den Bremssattel 2 der Scheibenbremse abgestützt. Dies ist insbesondere in Fig. 3 angedeutet. Die Abstützung erfolgt über ein Schwenklager, wozu zwischen der Zuspannwelle 11 und einer Gegenfläche im Bremssattel 2 zwei Schalenlager 16 angeordnet sind. In die andere Richtung, also zu dem Bremsbelag und der Bremsscheibe hin, ist die Zuspannwelle 11 über zwei weitere Schalenlager 17 schwenkbar gegen das in diesem Bereich muldenförmig gestaltete Druckstück 8 abgestützt.

Wie die Figur 1 und 2 zeigt, ist die Zuspannwelle 11 als Exzenter ausgebildet. Die rückwärtigen, gegen den Bremssattel 2 abgestützten Schalenlager 16 haben eine in der Höhe versetzt angeordnete Drehachse A2 im Vergleich zu der Drehachse A1 der gegen das Druckstück 8 abgestützten Schalenlager 17. Bei einem Verdrehen der Zuspannwelle 11 um die Drehachse A2, welche die Drehbewegung gegenüber dem Bremssattel 2 definiert, kommt es daher zu einer Vorwärtsbewegung des Druckstücks 8 in Richtung zu der Bremsscheibe der Scheibenbremse, so dass die Bremse zugespannt wird.

Zum Verdrehen der Zuspannwelle 11 mittels verstärkender Hebelwirkung dient, als einstückiger Bestandteil des Bremshebels 10, der Hebelarm 12. Dessen Mittellinie erstreckt sich rechtwinklig zu der Zuspannwelle 11. Der Hebelarm 12 ist nahe seines äußeren Endes 12A mit einer Abstützung 15 versehen. Diese ist vorzugsweise kalottenartig gestaltet und definiert einen Abstützpunkt, gegen den das Kraftglied der Scheibenbremse arbeitet. Bei druckluftbetätigten Scheibenbremsen ist dieses Kraftglied der Stößel eines pneumatischen Bremszylinders.

Der Bremshebel 10 ist insgesamt gabelförmig und verzweigt sich, ausgehend von dem auf der Schwenkmittellinie angeordneten Hebelarm 12, in zwei Schenkel 13A, 13B, von denen der eine Schenkel 13A mit dem ersten Abschnitt 11A der Zuspannwelle 11, und der zweite Schenkel 13B mit dem zweiten Abschnitt 11B der Zuspannwelle 11 verbunden ist. Auf diese Weise weist der Bremshebel 10 in Verlängerung des Hebelarms 12 nach innen einen Freiraum 40 auf. Begrenzt wird dieser unter anderem durch die einander zugewandten Stirnflächen der Abschnitte 11A, 11B der Zuspannwelle 11, und zu dem Hebelarm 12 hin durch das innere Ende 12B des Hebelarms 12.

Das innere Ende 12B des Hebelarms 12 ist jener Ort, an dem sich die Schenkel 13A, 13B verzweigen. Dieser Ort befindet sich zwischen der Drehachse A2, um die der Bremshebel 10 relativ zu dem Bremssattel 2 schwenkt, und der Abstützung 15. Vorzugsweise befindet sich dieser Ort auf ungefähr einem Drittel der Distanz zwischen der Drehachse A2, um die der Bremshebel 10 relativ zu dem Bremssattel schwenkt, und der Abstützung 15.

Der durch die zweischenklige Gabelform des Bremshebels 10 bedingte Freiraum 40 bietet Platz für eine Nachstelleinrichtung 20. Bestandteile der Nachstelleinrichtung 20 sind unter anderem ein Antriebselement 27, ein das Lüftspiel der Bremse verringerndes Abtriebselement und, im Bewegungsweg zwischen Antriebselement 27 und Abtriebselement, eine Einwegekupplung und ein Überlastglied.

Diese Bestandteile der Nachstelleinrichtung 20 sind auf einer gemeinsamen Nachstellachse L angeordnet. Die Nachstellachse L erstreckt sich in Zuspannrichtung und damit senkrecht zu der Ebene der (nicht dargestellten) Bremsscheibe. Die Nachstellachse L erstreckt sich durch den Freiraum 40 des Bremshebels 10 hindurch. Sie ist vorzugsweise so angeordnet, dass sie eine der Dreh- bzw. Schwenkachsen A1, A2 des Bremshebels 10 kreuzt.

Um die Nachstellung der Bremse aus dem Schwenken des Bremshebels 10 abzuleiten, ist ein Nachstellgetriebe vorhanden, welches den Bremshebel 10 mit dem Antriebselement 27 der Nachstelleinrichtung 20 koppelt. Das Nachstellgetriebe setzt sich aus einem an dem Bremshebel 10 angeordneten Zapfen 31 und einer damit zusammenwirkenden Kulisse 32 an dem Antriebselement 27 zusammen. Die Kulisse 32 ist Teil der Nachstelleinrichtung 20. Vorzugsweise greifen der Zapfen 31 und die Kulisse 32 nahezu spielfrei ineinander, um Irritationen der Bremsnachstellung durch Erschütterungen oder Vibrationen der Scheibenbremse zu verhindern.

Der Zapfen 31 ist in dem Freiraum 40 an dem inneren Ende 12B des Hebelarms 12 angeordnet, also dort, wo sich die beiden Schenkel 13A, 13B verzweigen. Auf diese Weise befindet sich der Zapfen 31 an einem Ort in jener Ebene E, innerhalb der der Hebelarm 12 während der Zuspannung der Bremse seine Schwenkbewegung S durchführt. In dieser Ebene E liegt auch die Nachstellachse L. Zugleich befindet sich der Zapfen 31 an einem Ort zwischen der Nachstellachse L und der am anderen Ende 12A des Hebelarms 12 angeordneten Abstützung 15 für das Kraftglied.

Die in Fig. 1 dargestellte Form des Zapfens 31 ist aus der WO 2016/112895 A1 bekannt. Demgemäß ist das freie Ende des Zapfens 31 kugelförmig ausgebildet und ragt in die nachstellseitig angeordnete Kulisse 32 hinein. Diese setzt sich aus zwei äquidistant verlaufenden Armen und einem dazwischen angeordneten Schlitz 33 zusammen. In dem Schlitz vermag sich der Zapfen 31 mit seinem kugelförmigen Ende längs der Kulisse 32 zu bewegen, wobei er das Antriebselement 27 mit dem kugelförmigen Abschnitt seines freien Endes mitnimmt und in Drehung um die Nachstellachse L versetzt.

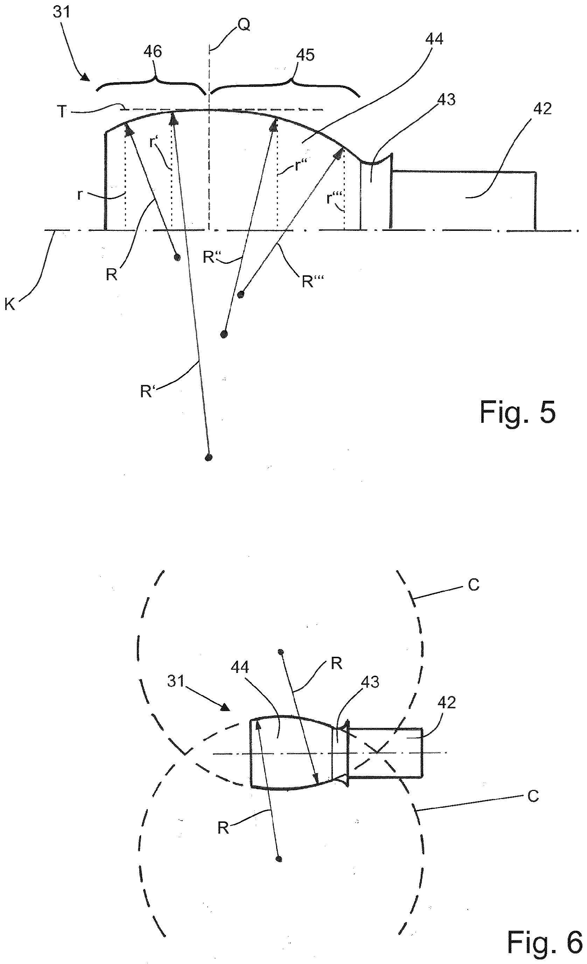

Auch bei einer Scheibenbremse gemäß der Erfindung ist der Zapfen 31 in dem Freiraum 40 an dem inneren Ende 12B des Hebelarms 12 angeordnet (Fig. 2 bis 4). Im Unterschied zu der in Fig. 1 dargestellten Zapfenform, weist der erfindungsgemäße Zapfen 31 kein kugelförmiges Ende auf. Vielmehr weist der Zapfen 31 eine Form auf, mit welcher dessen Kontaktfläche zu den Innenflächen 50, 51 der Kulisse 32 bzw. den Schlitz 33 der Kulisse 32 begrenzenden Innenflächen 50, 51 erhöht wird. Wie eingangs erläutert, wird dadurch die Materialabnutzung der Kulisseninnenflächen 50, 51 reduziert. Nachfolgend wird anhand der Figuren 5 und 6 die Zapfengeometrie bzw. die Anordnung des Zapfens 31 an dem Hebelarm 12 genauer beschrieben.

Mit einem Fuß- und Befestigungsabschnitt 42 ist der Zapfen 31 an dem inneren Ende 12B des Hebelarms 12 befestigt. Der Zapfen 31 ist entlang seiner Längsachse K, also in Richtung der Nachstelleinrichtung 20, rotationssymmetrisch ausgebildet. Fig. 5 zeigt entsprechend nur eine Hälfte des rotationssymmetrisch ausgebildeten Zapfens 31. Zur Befestigung des Zapfens 31 kann dieser als Kerbstift ausgestaltet sein und im Presssitz in den Hebelarm 12 bzw. eine dazu vorgesehene hebelarmseitige Bohrung eingeschlagen werden, insbesondere mit dessen Fuß- und Befestigungsabschnitt 42. Jener Bereich des Fuß- und Befestigungsabschnitts 42, der in die hebelarmseitige Bohrung eingeschlagen wird, kann gegenüber einem außerhalb der Bohrung liegenden Bereich des Fuß- und Befestigungsabschnitts 42 von geringerem Durchmesser sein. In diesem Fall stützt sich der außerhalb der Bohrung liegende Bereich des Fuß- und Befestigungsabschnitts 42 flanschartig an dem Hebelarm 12 ab (Fig. 4). Auch ist denkbar, dass der Fuß- und Befestigungsabschnitt 42 über dessen gesamte Länge nahezu den gleichen Durchmesser aufweist (Fig. 5, 6). Auch ist eine Ausgestaltung denkbar, bei der die Bohrung mit einem Innengewinde und der Zapfen 31 an seinem Fuß- und Befestigungsabschnitt 42 mit einem dazu korrespondierenden Außengewinde versehen ist. Sodann kann der Zapfen 31 in den Hebelarm 12 eingeschraubt werden.

In Richtung der Nachstelleinrichtung 20 bzw. entlang der Zapfenlängsachse K setzt sich der Zapfen 31 ausgehend von dem Fuß- und Befestigungsabschnitt 42 mit weiteren Abschnitten 43, 44, 47 fort (siehe insbesondere Fig. 4 - 6). Dabei weist der Zapfen 31 über den größten Teil seiner Länge auf dem Abschnitt 44 eine nach außen gekrümmte, konvexe Außenkontur auf.

Gemäß einer ersten Ausführungsform der Erfindung variiert der der Außenkontur des Zapfenabschnitts 44 zugrundeliegende Krümmungsradius R, R', ... entlang der Längsachse K des Zapfens 31. Mathematisch werden Krümmungsradien R, R', ... als Radien von an einer mathematischen Kurve an verschiedenen Positionen anliegenden Krümmungskreisen verstanden. Anders formuliert gibt der Krümmungsradius R, R', ... den Betrag des Kehrwerts der Krümmung einer mit der Außenkontur übereinstimmenden mathematischen Kurve an einem auf der Kurve liegenden Punkt (bzw. einer Längsposition auf der Außenkontur) an. Die Variationen der Krümmungsradien R, R', ... entlang der Längsachse K ist in Fig. 5 schematisch illustriert. An jener Längsposition, bei der die Steigung einen Vorzeichenwechsel erfährt, geht der Krümmungsradius R, R', ... gegen einen Wert von unendlich. Gemäß einer zweiten Ausführungsform (Fig. 6) kann die Außenkontur des Zapfenabschnitts 44 entlang der Längsachse K auch einen konstanten Krümmungsradius R aufweisen. In diesem Fall definiert lediglich ein einziger Krümmungskreis C die Krümmung der Außenkontur entlang der Achse K.

Bei beiden Ausführungsformen sind die Krümmungsradien R, R', ... auf der Außenkontur an jeder Längsposition größer als der halbe Querschnittsdurchmesser r, r', ... des Zapfens 31 an diesen Positionen. Dabei bezieht sich der Querschnittsdurchmesser r, r', ... auf eine sich senkrecht zur Längsachse K des Zapfens 31 erstreckende Querachse Q.

Der die konvexe Außenkontur aufweisende Abschnitt 44 weist zwei Teilabschnitte 45, 46 auf, wobei der Übergang zwischen dem ersten Teilabschnitt 45 und dem zweiten Teilabschnitt 46 dadurch definiert ist, dass dort die an der Außenkontur 44 anliegende Tangente T exakt parallel zur Längsachse K des Zapfens 31 verläuft. Dies ist in Fig. 5 illustriert. Bezogen auf die Längsachse K ist der erste Teilabschnitt 45 näher zu dem Bremshebel 10 hin gelegen als der zweite Teilabschnitt 46. Ferner weist der erste Teilabschnitt 45 eine größere Längenausdehnung entlang der Zapfenlängsachse K auf als der zweite Teilabschnitt 46.

Im Übergangsbereich zwischen dem ersten Teilabschnitt 45 und dem zweiten Teilabschnitt 46 erfährt die Steigung der Außenkontur entlang der Längsachse K einen Vorzeichenwechsel. So ist die Steigung der Außenkontur im ersten Teilabschnitt 45 in Richtung des zweiten Teilabschnitts 46 positiv. Im zweiten Teilabschnitt 46 jedoch setzt sich die Außenkontur in gleicher Richtung mit einer negativen Steigung fort.

Aufgrund der unterschiedlichen Längenausdehnung der Teilabschnitte 45, 46 ist der Zapfen 31 bezogen auf die Querachse Q asymmetrisch. Im Übergangsbereich zwischen dem ersten Teilabschnitt 45 und dem zweiten Teilabschnitt 46 weist der die konvex gekrümmte Außenkontur aufweisende Abschnitt 44 den größten Querschnitt auf. Nur im Bereich des Fuß- und Befestigungsabschnitts 42 kann der Zapfen 31 einen noch größeren Querschnitt aufweisen.

Der Übergang zwischen dem Fuß- und Befestigungsabschnitt 42 und dem die gekrümmte Außenkontur aufweisenden Abschnitt 44 wird von einem Übergangsabschnitt 43 gebildet, der nach außen zwar ebenfalls eine gekrümmte Außenkontur aufweisen kann, diese ist jedoch vorzugsweise konkav. Der Übergangsabschnitt 43 ist bezogen auf den ersten Teilabschnitt 45 von vergleichsweise geringer Länge.

Entlang der Längsachse K setzt sich der Zapfen 31 mit einem an den zweiten Teilabschnitt 46 anschließenden Endabschnitt 47 fort (Fig. 5). Dieser kann eine geringere Länge und Breite aufweisen als der zweite Teilabschnitt 46.

Wie bereits erwähnt, bewegt sich der Zapfen 31 beim Verschwenken des Bremshebels 10 innerhalb der Kulisse 32 bzw. innerhalb eines an der Kulisse 32 ausgebildeten Schlitzes 33. Jene Kulisse 32, die im Rahmen der Erfindung vorzugsweise Verwendung findet, ist nachfolgend genauer beschrieben.

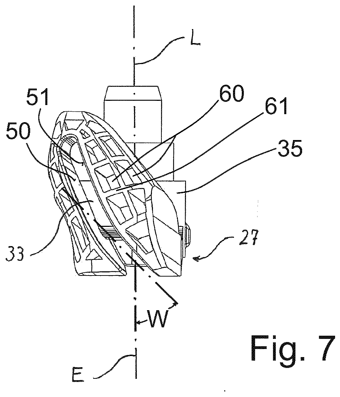

Damit es bei der Zuspannbewegung S zu einer Drehung des Antriebselements 27 um die Nachstellachse L kommt, verläuft die Kulisse 32 schräg zu der Nachstellachse L, bzw. schräg zu der durch die Schwenkbewegung S des Hebelarms 12 definierten Ebene E (Fig. 7). Um die Bewegungsübertragung besonders reibungsarm aus der Schwenkbewegung S des Hebelarms 12 abzuleiten, beschreibt die Kulisse 32 zumindest teilweise einen Bogen, welcher, bezogen auf die Nachstellachse L, nach außen gekrümmt ist. Zudem variiert der Winkel W, unter dem sich die Kulisse 32 und deren Schlitz 33 schräg zu der Ebene E erstreckt, über die Länge der Kulisse 32. Der Winkel W zu der Ebene E ist zu Beginn der Schwenkbewegung S größer, und wird dann im Verlauf der Zuspannung, also mit zunehmender Schwenkbewegung S des Hebels 10, geringer.

Die in Fig. 7 dargestellte Kulisse 32 besteht vorzugsweise aus Kunststoff. Sie hat die Gestalt eines Doppelarms mit Schlitzführung und ist an einem Träger 35 angeformt. Der Träger 35 kann drehfest auf einer Antriebswelle der Nachstelleinrichtung 20 befestigt werden.

Der Träger 35 weist einen Befestigungsbereich zur drehfesten Montage des Antriebselements 27 auf. Der Träger kann als Buchse gestaltet sein, die über ihre Länge stufenweise sich verjüngende Außendurchmesser aufweist.

Wie aus Fig. 7 ersichtlich ist, kann die Kulisse 32 als eine Kunststoff-Wabenstruktur gestaltet sein, um so bei geringem Gewicht eine hohe Festigkeit zu erzielen. Bei einer solchen Wabenstruktur ist der Körper segmentartig mit Materialaussparungen 60 versehen, die von Stegen 61 aus Vollmaterial begrenzt werden.

Wie in Fig. 2 dargestellt, kann bei der Scheibenbremse ebenso eine Kulisse 32 ohne Wabenstruktur und/oder eine nicht aus Kunststoff gefertigte Kulisse verwendet werden.

### Bezugszeichenliste

- 2: Bremssattel
- 5: Zuspanneinrichtung
- 8: Druckstück
- 10: Bremshebel
- 11: Zuspannwelle
- 11A: erster Abschnitt
- 11B: zweiter Abschnitt
- 12: Hebelarm
- 12A: äußeres Ende
- 12B: inneres Ende
- 13A: Schenkel
- 13B: Schenkel
- 15: Abstützung
- 16: Schalenlager
- 17: Schalenlager
- 20: Nachstelleinrichtung
- 27: Antriebselement
- 31: Zapfen
- 32: Kulisse
- 33: Schlitz
- 35: Träger
- 40: Freiraum
- 42: Fuß- und Befestigungsabschnitt
- 43: Übergangsabschnitt
- 44: Abschnitt
- 45: erster Teilabschnitt
- 46: zweiter Teilabschnitt
- 47: Endabschnitt
- 50: Innenfläche
- 51: Innenfläche
- 60: Materialaussparung
- 61: Steg

- A1: Drehachse
- A2: Drehachse
- C: Krümmungskreis
- E: Ebene
- K: Längsachse
- L: Nachstellachse
- R: Krümmungsradius
- R': Krümmungsradius
- r: halber Querschnittsdurchmesser
- r': halber Querschnittsdurchmesser
- S: Schwenkbewegung
- T: Tangente
- Q: Querachse
- W: Winkel

## Patentansprüche

1. Scheibenbremse für ein Fahrzeug, vorzugsweise ein Nutzfahrzeug, mit
- einem eine Bremsscheibe und Bremsbeläge zu beiden Seiten der Bremsscheibe übergreifenden Bremssattel (2),
- einer durch ein Kraftglied und vorzugsweise einen Druckluftzylinder betätigbaren Zuspanneinrichtung (5),
- einer Nachstelleinrichtung (20) zum Ausgleich des Bremsbelag- und Bremsscheibenverschleißes, die auf einer in Zuspannrichtung sich erstreckenden Nachstellachse (L) angeordnet, und mit einem um die Nachstellachse (L) drehbaren Antriebselement (27) versehen ist, und
- einem Bremshebel (10), der Bestandteil der Zuspanneinrichtung (5) ist und sich zusammensetzt aus einer Zuspannwelle (11), die in dem Bremssattel (2) auf einer Schwenkachse gelagert und gegen ein gegen den zuspannseitigen Bremsbelag arbeitendes Druckstück (8) drehbeweglich abgestützt ist, und einem mit der Zuspannwelle (11) verbundenen Hebelarm (12), dessen Schwenkmittellinie sich rechtwinklig zu der Zuspannwelle (11) erstreckt, und der im Bereich seines äußeren Endes (12A) mit einer Abstützung (15) für das Kraftglied versehen ist, wobei der Bremshebel (10) in Verlängerung des Hebelarms (12) nach innen einen Freiraum (40) aufweist, durch den sich die Nachstellachse (L) erstreckt,
- einem Getriebe, welches den Bremshebel (10) mit dem Antriebselement (27) koppelt und sich aus einem Zapfen (31) an dem Bremshebel (10) und einer damit zusammenwirkenden Kulisse (32) an dem Antriebselement (27) zusammensetzt, wobei der Zapfen (31) an dem inneren Ende (12B) des Hebelarms (12) in der durch die Schwenkbewegung (S) des Hebelarms (12) definierten Ebene (E) angeordnet ist.
**dadurch gekennzeichnet, dass** der Zapfen (31) über den größten Teil seiner Länge eine nach außen gekrümmte Außenkontur aufweist und dass an jeder Längsposition der Krümmungsradius (R, R', ...) der Außenkontur größer ist als der halbe Querschnittsdurchmesser (r, r', ...) des Zapfens (31) an dieser Position.

2. Scheibenbremse nach Anspruch 1, **dadurch gekennzeichnet, dass** der Zapfen (31) entlang seiner Längsachse (K) rotationssymmetrisch ausgebildet ist.

3. Scheibenbremse nach einem der Ansprüche 1 oder 2, **dadurch gekennzeichnet, dass** der Zapfen (31) zumindest nacheinander angeordnet einen Fuß- und Befestigungsabschnitt (42) und den die gekrümmte Außenkontur aufweisenden Abschnitt (44) aufweist.

4. Scheibenbremse nach Anspruch 3, **dadurch gekennzeichnet, dass** der Abschnitt (44) eine konvexe Außenkontur aufweist.

5. Scheibenbremse nach Anspruch 3, **dadurch gekennzeichnet, dass** der Fuß- und Befestigungsabschnitt (42) im Presssitz in den Hebelarm (12) eingeschlagen ist.

6. Scheibenbremse nach Anspruch 3 oder 4, **dadurch gekennzeichnet, dass** der Abschnitt (44) zwei Teilabschnitte (45, 46) aufweist und im Übergangsbereich zwischen dem ersten und zweiten Teilabschnitt (45, 46) eine an der Außenkontur anliegende Tangente (T) parallel zur Längsachse (K) des Zapfens (31) verläuft.

7. Scheibenbremse nach Anspruch 6, **dadurch gekennzeichnet, dass** die Außenkontur des ersten und zweiten Teilabschnitts (45, 46) in Längsrichtung eine Steigung mit umgekehrten Vorzeichen aufweist.

8. Scheibenbremse nach Anspruch 6 oder 7, **dadurch gekennzeichnet, dass** der erste Teilabschnitt (45) näher zu dem Bremshebel (10) hin gelegen ist und entlang der Längsachse (K) eine größere Länge aufweist als der daran anschließende zweite Teilabschnitt (46).

9. Scheibenbremse nach einem der vorangehenden Ansprüche, **dadurch gekennzeichnet, dass** der Zapfen (31) fest oder lösbar mit dem Hebelarm (12) verbunden ist.

10. Scheibenbremse nach Anspruch 1, **dadurch gekennzeichnet, dass** sich die Kulisse (32) schräg zu der durch die Schwenkbewegung (S) des Hebelarms (12) definierten Ebene (E) erstreckt.

11. Scheibenbremse nach Anspruch 1, **dadurch gekennzeichnet, dass** die Kulisse (32) aus Kunststoff besteht.

12. Scheibenbremse nach Anspruch 1, **dadurch gekennzeichnet, dass** die Kulisse (32) als Wabenstruktur gefertigt ist.

13. Bremshebel als Bestandteil einer Zuspanneinrichtung (5) einer Scheibenbremse, der sich zusammensetzt aus einer Zuspannwelle (11), die in einem Bremssattel (2) auf einer Schwenkachse gelagert und gegen ein gegen den zuspannseitigen Bremsbelag arbeitendes Druckstück (8) drehbeweglich abgestützt ist, und einem mit der Zuspannwelle (11) verbundenen Hebelarm (12), dessen Schwenkmittellinie sich rechtwinklig zu der Zuspannwelle (11) erstreckt, und der im Bereich seines äußeren Endes (12A) mit einer Abstützung (15) für ein Kraftglied versehen ist, wobei der Bremshebel (10) in Verlängerung des Hebelarms (12) nach innen einen Freiraum (40) aufweist, durch den sich eine Nachstellachse (L) einer Nachstelleinrichtung (20) erstreckt, die zum Ausgleich des Bremsbelag- und Bremsscheibenverschleißes vorgesehen ist und ein um die Nachstellachse (L) drehbares Antriebselement (27) aufweist, und wobei am inneren Ende (12B) des Hebelarms (12) in der durch die Schwenkbewegung des Hebelarms (12) definierten Ebene (E) ein Zapfen (31) angeordnet ist, der mit einer Kulisse (32) eines den Bremshebel (10) mit dem Antriebselement (27) koppelnden Getriebes zusammenwirkt, **dadurch gekennzeichnet, dass** der Zapfen (31) über den größten Teil seiner Länge eine nach außen gekrümmte Außenkontur aufweist und dass die Krümmungsradien (R, R', ...) der Außenkontur an jeder Längsposition größer sind als der halbe Querschnittsdurchmesser (r, r', ...) des Zapfens (31) an diesen Positionen.

14. Bremshebel nach Anspruch 13, **dadurch gekennzeichnet, dass** der Zapfen (31) entlang seiner Längsachse (K) rotationssymmetrisch ausgebildet ist.

15. Bremshebel nach Anspruch 13 oder 14, **dadurch gekennzeichnet, dass** der Zapfen (31) zumindest nacheinander angeordnet einen Fuß- und Befestigungsabschnitt (42) und den die gekrümmte Außenkontur aufweisenden Abschnitt (44) aufweist.

16. Bremshebel nach Anspruch 15, **dadurch gekennzeichnet, dass** der Abschnitt (44) eine konvexe Außenkontur aufweist.

17. Bremshebel nach einem der Ansprüche 13 bis 15, **dadurch gekennzeichnet, dass** der Bremshebel (10) eine Bohrung aufweist, in die der Zapfen (31) mit seinem Fuß- und Befestigungsabschnitt (42) im Presssitz eingeschlagen ist.

18. Bremshebel nach Anspruch 15 oder 16, **dadurch gekennzeichnet, dass** der Abschnitt (44) zwei Teilabschnitte (45, 46) aufweist und im Übergangsbereich zwischen dem ersten und zweiten Teilabschnitt (45, 46) eine an der Außenkontur anliegende Tangente (T) parallel zur Längsachse (K) des Zapfens (31) verläuft.

19. Bremshebel nach Anspruch 18, **dadurch gekennzeichnet, dass** die Außenkontur des ersten und zweiten Teilabschnitts (45, 46) in Längsrichtung eine Steigung mit umgekehrten Vorzeichen aufweist.

20. Bremshebel nach Anspruch 18 oder 19, **dadurch gekennzeichnet, dass** der erste Teilabschnitt (45) näher zu dem Bremshebel (10) hin gelegen ist und entlang der Längsachse (K) eine größere Länge aufweist als der daran anschließende zweite Teilabschnitt (46).

21. Bremshebel nach einem der Ansprüche 13 bis 20, **dadurch gekennzeichnet, dass** der Zapfen (31) fest oder lösbar mit dem Hebelarm (12) verbunden ist.

## Claims

1. A disc brake for a vehicle, preferably a commercial vehicle, having
- a calliper (2) engaging over a brake disc and brake linings on both sides of the brake disc,
- a brake application device (5) which can be actuated by a force member and preferably a pneumatic cylinder,
- an adjustment device (20) for offsetting the wear of the brake lining and brake disc, which adjustment device (20) is arranged on an adjustment axis (L) extending in the direction of application, and having a drive element (27) which is rotatable about the adjustment axis (L), and
- a brake lever (10), which is part of the brake application device (5) and is made up of a brake application shaft (11), which is mounted in the calliper (2) on a pivot axis and is supported in a rotatably movable manner against a pressure piece (8) working against the brake application-side brake lining, and a lever arm (12) connected to the brake application shaft (11), the pivot centre line of which lever arm (12) extends perpendicularly to the brake application shaft (11), and which is provided in the region of its outer end (12A) with a support (15) for the force member, wherein the brake lever (10) has a clearance (40) in extension of the lever arm (12) inwardly, through which clearance (40) the adjustment axis (L) extends,
- a gear, which couples the brake lever (10) to the drive element (27) and is made up of a pin (31) on the brake lever (10) and a link (32), cooperating therewith, on the drive element (27), wherein the pin (31) is arranged on the inner end (12B) of the lever arm (12) in the plane (E) defined by the pivoting movement (S) of the lever arm (12),
**characterized in that** the pin (31) has an outwardly curved outer contour over the largest part of its length and that the radius of curvature (R, R', ...) of the outer contour is larger at every longitudinal position than half the cross-sectional diameter (r, r', ...) of the pin (31) at this position.

2. The disc brake according to claim 1, **characterized in that** the pin (31) is formed in a rotationally symmetrical manner along its longitudinal axis (K).

3. The disc brake according to one of claims 1 or 2, **characterized in that** the pin (31) has a foot and fastening section (42) and the section (44) having the curved outer contour at least arranged in succession.

4. The disc brake according to claim 3, **characterized in that** the section (44) has a convex outer contour.

5. The disc brake according to claim 3, **characterized in that** the foot and fastening section (42) is forced into the lever arm (12) by press fitting.

6. The disc brake according to claim 3 or 4, **characterized in that** the section (44) has two segments (45, 46) and in the transition region between the first and second segment (45, 46) a tangent (T) abutting the outer contour runs parallel to the longitudinal axis (K) of the pin (31).

7. The disc brake according to claim 6, **characterized in that** the outer contour of the first and second segment (45, 46) has a gradient with opposite signs in the longitudinal direction.

8. The disc brake according to claim 6 or 7, **characterized in that** the first segment (45) is located closer to the brake lever (10) and has a greater length along the longitudinal axis (K) than the second segment (46) adjacent thereto.

9. The disc brake according to one of the preceding claims, **characterized in that** the pin (31) is securely or releasably connected to the lever arm (12).

10. The disc brake according to claim 1, **characterized in that** the link (32) extends obliquely to the plane (E) defined by the pivoting movement (S) of the lever arm (12).

11. The disc brake according to claim 1, **characterized in that** the link (32) is made of plastic.

12. The disc brake according to claim 1, **characterized in that** the link (32) is produced as a honeycomb structure.

13. A brake lever as component of a brake application device (5) of a disc brake, which is made up of a brake application shaft (11), which is mounted in a calliper (2) on a pivot axis and is supported in a rotatably movable manner against a pressure piece (8) working against the brake application-side brake lining, and a lever arm (12) connected to the brake application shaft (11), the pivot centre line of which lever arm (12) extends perpendicularly to the brake application shaft (11), and which is provided in the region of its outer end (12A) with a support (15) for a force member, wherein the brake lever (10) has a clearance (40) in extension of the lever arm (12) inwardly, through which clearance (40) an adjustment axis (L) of an adjustment device (20) extends, which is provided for offsetting the wear of the brake lining and brake disc and has a drive element (27) which is rotatable about the adjustment axis (L), and wherein a pin (31) is arranged on the inner end (12B) of the lever arm (12) in the plane (E) defined by the pivoting movement of the lever arm (12), which pin (31) cooperates with a link (32) of a gear which couples the brake lever (10) to the drive element (27), **characterized in that** the pin (31) has an outwardly curved outer contour over the largest part of its length and that the radii of curvature (R, R', ...) of the outer contour are larger at every longitudinal position than half the cross-sectional diameter (r, r', ...) of the pin (31) at these positions.

14. The brake lever according to claim 13, **characterized in that** the pin (31) is formed in a rotationally symmetrical manner along its longitudinal axis (K).

15. The brake lever according to claim 13 or 14, **characterized in that** the pin (31) has a foot and fastening section (42) and the section (44) having the curved outer contour at least arranged in succession.

16. The brake lever according to claim 15, **characterized in that** the section (44) has a convex outer contour.

17. The brake lever according to one of claims 13 to 15, **characterized in that** the brake lever (10) has a hole, into which the pin (31) with its foot and fastening section (42) is forced by press fitting.

18. The brake lever according to claim 15 or 16, **characterized in that** the section (44) has two segments (45, 46) and in the transition region between the first and second segment (45, 46) a tangent (T) abutting the outer contour runs parallel to the longitudinal axis (K) of the pin (31).

19. The brake lever according to claim 18, **characterized in that** the outer contour of the first and second segment (45, 46) has a gradient with opposite signs in the longitudinal direction.

20. The brake lever according to claim 18 or 19, **characterized in that** the first segment (45) is located closer to the brake lever (10) and has a greater length along the longitudinal axis (K) than the second segment (46) adjacent thereto.

21. The brake lever according to one of claims 13 to 20, **characterized in that** the pin (31) is securely or releasably connected to the lever arm (12).

## Revendications

1. Frein à disque pour un véhicule, de préférence un véhicule utilitaire, avec
- un étrier de frein (2) enserrant le frein à disque et les garnitures de freinage des deux côtés du frein à disque,
- un dispositif de serrage (5) pouvant être actionné par un organe de force et de préférence un vérin à air comprimé,
- un dispositif de rattrapage de jeu (20) pour la compensation de l'usure de la garniture de freinage et du disque de frein, qui est disposé sur un axe de rattrapage de jeu (L) s'étendant dans le dispositif de serrage et qui est muni d'un élément d'entraînement (27) rotatif autour de l'axe de rattrapage de jeu (L) et
- un levier de freinage (10) qui fait partie du dispositif de serrage (5) et qui est constitué d'un arbre de serrage (11) qui est logé dans l'étrier de frein (2) sur un axe de pivotement et qui est soutenu de manière rotative contre une pièce de pression (8) fonctionnant contre la garniture de freinage côté serrage, et un bras de levier (12) relié avec l'arbre de serrage (11), dont la ligne centrale de pivotement s'étend perpendiculairement à l'arbre de serrage (11) et qui est muni, au niveau de son extrémité externe (12A), d'un appui (15) pour l'organe de force, le levier de freinage (10) comprenant, dans le prolongement du bras de levier (12) vers l'intérieur, un espace libre (40) à travers lequel s'étend l'axe de rattrapage de jeu (L),
- une transmission qui couple le levier de freinage (10) avec l'élément d'entraînement (27) et qui est constitué d'un tenon (31) sur le levier de freinage (10) et d'une coulisse (32), interagissant avec celui-ci, sur l'élément d'entraînement (27), le tenon (31) étant disposé sur l'extrémité interne (12B) du bras de levier (12) dans le plan (E) défini par le mouvement de pivotement (S) du bras de levier (12),
**caractérisé en ce que** le tenon (31) comprend, sur la majeure partie de sa longueur, un contour externe incurvé vers l'extérieur et **en ce que**, à chaque position longitudinale, le rayon de courbure (R, R'...) du contour externe est supérieur à la moitié du diamètre de section transversale (r, r'...) du tenon (31) à cette position.

2. Frein à disque selon la revendication 1, **caractérisé en ce que** le tenon (31) est réalisé de manière symétrique en rotation le long de son axe longitudinal (K).

3. Frein à disque selon l'une des revendications 1 ou 2, **caractérisé en ce que** le tenon (31) comprend, disposées l'un après l'autre, au moins une portion de pied et de fixation (42) et la portion (44) présentant le contour externe incurvé.

4. Frein à disque selon la revendication 3, **caractérisé en ce que** la portion (44) présente un contour externe convexe.

5. Frein à disque selon la revendication 3, **caractérisé en ce que** la portion de pied et de fixation (42) est enfoncée avec un ajustement serré dans le bras de levier (12).

6. Frein à disque selon la revendication 3 ou 4, **caractérisé en ce que** la portion (44) comprend deux portions partielles (45, 46) et, dans la zone de transition entre les première et deuxième portions partielles (45, 46), s'étend une tangente (T) s'appuyant contre le contour externe et parallèle à l'axe longitudinal (K) du tenon (31).

7. Frein à disque selon la revendication 6, **caractérisé en ce que** les contours externes des première et deuxième portions partielles (45, 46) présentent, dans la direction longitudinale, des pentes de sens opposés.

8. Frein à disque selon la revendication 6 ou 7, **caractérisé en ce que** la première portion partielle (45) est plus proche du levier de freinage (10) et présente, le long de l'axe longitudinal (K), une longueur supérieure à la deuxième portion partielle (46) qui y est raccordée.

9. Frein à disque selon l'une des revendications précédentes, **caractérisé en ce que** le tenon (31) est relié de manière fixe ou amovible avec le bras de levier (12).

10. Frein à disque selon la revendication 1, **caractérisé en ce que** la coulisse (32) s'étend en oblique par rapport au plan (E) défini par le mouvement de pivotement (S) du bras de levier (12).

11. Frein à disque selon la revendication 1, **caractérisé en ce que** la coulisse (32) est constituée de matière plastique.

12. Frein à disque selon la revendication 1, **caractérisé en ce que** la coulisse (32) présente une structure alvéolaire.

13. Levier de freinage en tant que partie d'un dispositif de serrage (5) d'un frein à disque, qui est constitué d'un arbre de serrage (11), qui est logé dans un étrier de freinage (2) sur un axe de pivotement et qui est soutenu de manière rotative contre une pièce de pression (8) fonctionnant contre la garniture de freinage côté serrage et un bras de levier (12) relié avec l'arbre de serrage (11), dont la ligne centrale de pivotement s'étend perpendiculairement à l'arbre de serrage (11) et qui est muni, au niveau de son extrémité externe (12A), d'un appui (15) pour l'organe de force, le levier de freinage (10) comprenant, dans le prolongement du bras de levier (12), vers l'intérieur, un espace libre (40) à travers lequel s'étend un axe de rattrapage de jeu (L) d'un dispositif de rattrapage de jeu (20), qui est prévu pour la compensation de l'usure de la garniture de freinage et du disque de freinage et un élément d'entraînement (27) rotatif autour de l'axe de rattrapage de jeu (L) et moyennant quoi, au niveau de l'extrémité interne (12B) du bras de levier (12), dans le plan (E) défini par le mouvement de pivotement du bras de levier (12), est disposé un tenon (31) qui interagit avec une coulisse (32) d'une transmission couplant le levier de freinage (10) avec l'élément d'entraînement (27), **caractérisé en ce que** le tenon (31) présente, sur la plus grande partie de sa longueur, un contour externe incurvé vers l'extérieur et **en ce que** les rayons de courbure (R, R'...) du contour externe à chaque position longitudinale sont supérieurs à la moitié du diamètre de section transversale (r, r'...) du tenon (31) à ces positions.

14. Levier de freinage selon la revendication 13, **caractérisé en ce que** le tenon (31) est réalisé de manière symétrique en rotation le long de son axe longitudinal (K).

15. Levier de freinage selon la revendication 13 ou 14, **caractérisé en ce que** le tenon (31) comprend, disposées l'un après l'autre, au moins une portion de pied et de fixation (42) et la portion (44) présentant le contour externe incurvé.

16. Levier de freinage selon la revendication 15, **caractérisé en ce que** la portion (44) présente un contour externe convexe.

17. Levier de freinage selon l'une des revendications 13 à 15, **caractérisé en ce que** le levier de freinage (10) comprend un alésage dans lequel le tenon (31) est enfoncé, avec sa portion de pied et de fixation (42), avec un ajustement serré.

18. Levier de freinage selon la revendication 15 ou 16, **caractérisé en ce que** la portion (44) comprend deux portions partielles (45, 46) et, dans la zone de transition entre les première et deuxième portions partielles (45, 46), s'étend une tangente (T) s'appuyant contre le contour externe et parallèle à l'axe longitudinal (K) du tenon (31).

19. Levier de freinage selon la revendication 18, **caractérisé en ce que** les contours externes des première et deuxième portions partielles (45, 46) présentent, dans la direction longitudinale, des pentes de sens opposés.

20. Levier de freinage selon la revendication 18 ou 19, **caractérisé en ce que** la première portion partielle (45) est plus proche du levier de freinage (10) et présente, le long de l'axe longitudinal (K), une longueur supérieure à la deuxième portion partielle (46) qui y est raccordée.

21. Levier de freinage selon l'une des revendications 13 à 20, **caractérisé en ce que** le tenon (31) est relié de manière fixe ou amovible avec le bras de levier (12).
